(19) Europäisches Patentamt / European Patent Office / Office européen des brevets

(11) **EP 2 151 086 B1**

(12) **EUROPEAN PATENT SPECIFICATION**

(45) Date of publication and mention
of the grant of the patent:
**07.06.2017 Bulletin 2017/23**

(21) Application number: **08779280.0**

(22) Date of filing: **26.04.2008**

(51) Int Cl.:
*G06F 7/58* (2006.01)    *H04L 9/06* (2006.01)
*G01S 19/14* (2010.01)    *H04L 9/08* (2006.01)

(86) International application number:
**PCT/SE2008/050479**

(87) International publication number:
**WO 2008/133590 (06.11.2008 Gazette 2008/45)**

(54) **METHOD FOR ESTABLISHING A RANDOM NUMBER FOR SECURITY AND ENCRYPTION, AND A COMMUNICATIONS APPARATUS**

VERFAHREN ZUR ERZEUGUNG EINER ZUFALLSZAHL FÜR SICHERHEIT UND VERSCHLÜSSELUNG SOWIE KOMMUNIKATIONSVORRICHTUNG DAFÜR

PROCÉDÉ SERVANT À ÉTABLIR UN NOMBRE ALÉATOIRE POUR UNE SÉCURITÉ ET UN CHIFFREMENT, ET APPAREIL DE COMMUNICATIONS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.04.2007   US 914841 P**

(43) Date of publication of application:
**10.02.2010   Bulletin 2010/06**

(73) Proprietor: **Telefonaktiebolaget LM Ericsson (publ)**
**164 83 Stockholm (SE)**

(72) Inventors:
• **BLOM, Rolf**
**S-175 68 Järfälla (SE)**

• **NÄSLUND, Mats**
**S-168 36 Bromma (SE)**

(74) Representative: **Brann AB**
**P.O. Box 3690**
**Drottninggatan 27**
**103 59 Stockholm (SE)**

(56) References cited:
| | |
|---|---|
| EP-A1- 1 763 169 | GB-A- 2 426 399 |
| US-A1- 2004 141 614 | US-A1- 2004 248 549 |
| US-A1- 2006 067 527 | US-B1- 6 430 170 |
| US-B1- 7 006 633 | US-B1- 7 177 426 |
| US-B1- 7 177 426 | |

**Description**

**TECHNICAL FIELD**

The present invention is related to secure communications based on the use of a random number generated as a function of location. (As used herein, references to the "present invention" or "invention" relate to exemplary embodiments and not necessarily to every embodiment encompassed by the appended claims.) More specifically, the present invention is related to secure communications involving a mobile device based on the use of a random number generated as a function of received signals which provides randomly varying data related to location of the mobile device.

**BACKGROUND**

This section is intended to introduce the reader to various aspects of the art that may be related to various aspects of the present invention. The following discussion is intended to provide information to facilitate a better understanding of the present invention. Accordingly, it should be understood that statements in the following discussion are to be read in this light, and not as admissions of prior art.

In many applications, in particular ones related to security/encryption, it is of utmost importance to be able to generate "high quality" random numbers. These numbers are typically binary strings. (The terminology *random bits* and *random* numbers will be used interchangeably, due to the close connection between the two.) These numbers/bits are used for cryptographic purposes which include key generation for (symmetric) encryption, use as "seed" for pseudo-random generators, challenges for challenge-response protocols, random "nonce" used in connection to digital signatures etc, see A. Menzes, P. van Oorschot, and S. A. Vanstone: Handbook of Applied Cryptography, CRC Press, for a number of such applications. Note that in the case of key generation, the key can either be a so called *symmetric key* to be shared among a plurality of communicating parties, or, the key may be part of an *asymmetric* (public, private) *key-pair* where the private key should be known only to one party. In the former case, the key is in direct correspondence to a random bit-string but need to be (securely) communicated to the sharing parties. Thus, the random generator can in principle be used directly as a key generator, but a key agreement/exchange method is needed, e.g. RSA, Diffie-Hellman or out-of band means. In second case, the random value must typically undergo further processing, e.g. used as a seed in prime number generation. All these techniques (RSA, Diffie-Hellman and prime number generation) are well known in the art, e.g. the aforementioned Handbook of Applied Cryptography. Thus, the rest of the discussion will, unless otherwise explicitly stated, only be concerned with the problem of generating random numbers, from which keys, nonces, etc can be obtained and shared/exchanged between parties by well-known methods.

By the "quality" of the randomness, it is meant that it must be very difficult for an adversary to predict with a non-trivial success probability, what these random bits are. Otherwise, he/she could for instance:

- obtain some a priori knowledge of what key is used for encryption
- guess in advance what challenge he/she will get, thereby being able to prepare the answer in advance.

In electronic appliances such as computers or mobile terminals, the usual way to obtain random numbers is to use "measurements" of some physical phenomena that is random and unpredictable. It is very hard, if not impossible, to give formal mathematical proofs of randomness of numbers obtained in this way, but some sources are clearly better than others. Also, by having access to several, independent sources, one can (provably) increase the quality of the randomness by combing sources.

There are other uses of random numbers. One is for simulation purposes. Unless the numbers used are of a statistically good quality, results of the simulation may not say much about the true nature of the phenomenon one wants to study. Finally, random numbers are useful in gaming applications and electronic lotteries. Here, a poor random source may also cause a direct financial loss for the game provider and/or give an unfair game from the user's point of view. However, herein, the focus is only on security applications.

The following solutions for the generation of random numbers are among those currently used.

**A device equipped with a hardware clock.** This includes personal computers (PC), mobile phones etc. When random bits are needed, one usually reads the clock's value at a high resolution, say microseconds when available, and uses a few of the bits in this value (typically the least significant bits) as the "random" bits.

**A device with means of user interaction.** This is typically the case where a keyboard or mouse device is available, such as on a PC. When random bits are needed, the user is asked to aid the device in generating them. Either he is prompted to enter a number on the keyboard, and this number is then considered random by the device, or, the user is asked to type/point "randomly", and the device measures some characteristic, such as time between keystrokes or mouse pointer location at given intervals.

**Devices connected to communication networks.** In a PC connected to a network, gathering statistics such as data packet arrival/delay times can be used. If a mobile phone has an interface to the hardware doing signal strength measurements, collecting such measurements is a possibility.

**More complex computer environment.** A multi-user workstation can use statistics from the process scheduler, from delay times of disk or other I/O-operations etc. For a discussion of such methods, see M. Jacobsson, E. Shriver, B. K. Hillyer, and A. Juels: A Practical Secure Physical Random Bit Generator, Proceedings of the 5th ACM CCS conference, 1998.

All of the above methods have problems that are discussed below. First, however, it is noted that regardless of what method is used (including the current invention) it is almost always necessary to "amplify" the randomness. This is done by methods that combine several "slightly" random bits into fewer, but more random bits. There are some standard ways of doing this. For self-containment, this is discussed below.

**A general method for combining different sources.** Suppose that by one or more of the above discussed methods we have been able to obtain a number of random bits, $b_1$, $b_2$, $b_n$, where each $b_i$ is either 0 or 1. The bits could come from several different sources, or be observations of the same source at different times, all we assume is that the bits are statistically independent. Ideally, we would like each $b_i$ to be uniformly distributed, i.e. $Pr[b_i = 0] = Pr[b_i = 1] = 1/2$, but this may in general not be true. Suppose that $b_i$ is a random variable that is 1 with probability $(1+\varepsilon_i)/2$ (and thus 0 with probability $(1-\varepsilon_i)/2$) for some $0 < \varepsilon_i < 1$. Then, it is easy to see that if one sets

$$B = b_1 + b_2 + \cdots + b_n \bmod 2,$$

Then $Pr[B = 1] = (1+ \varepsilon_1 \cdot \varepsilon_2 \cdots \varepsilon_n)/2$. In particular, if all $\varepsilon_i$ are the same, $\varepsilon_i = \varepsilon$, then $Pr[B = 1] = (1+\varepsilon^n)/2$, an exponential improvement.

(To generalize, if the $b_i$ are decimal values, take the sum modulo 10 instead and so on.)

Another method, dating back to work of von Neuman (J. von Neumann: Various Techniques used in Connection with Random Digits. Applied Math Series, 12:36-38, 1951. Notes by G. E. Forsythe), is the following. Take two samples of the source, x and y. If x = 0, y = 1, we interpret this as a 1, and if x = 1, y = 0, this is taken as a 0. If x = y, discard this x, y and take two new samples. This method has the advantage that it will always produce a *completely unbiased* output (since it always holds that Pr [x = 0, y = 1] = Pr [x = 1, y = 0]). On the other hand, it may be necessary to take a large number of samples until x ≠ y is encountered.

This means that if once there is access to a source that is at least "slightly" random, this can be improved (at the cost of needing more bits). If the "bias", $\varepsilon$, is known, it is possible to use even better techniques, see M. Näslund and A. Russell: Extracting Optimally Unbiased Bits from a Biased Source, IEEE Transactions on Information Theory, 46 (2000), no 3, 1093-1103.

Another more heuristic way to smoothen a distribution is by hashing. Suppose that there is a relatively long, but not very uniform sequence of bits, b. Now apply a good cryptographic hash function, e.g. SHA-1 [3] to b and use hash(b) instead, which is typically 128-256 bits in length.

**Checking randomness.** Once there is a source and a method for producing some random bits, it is desirable to somehow "validate" or test the randomness. Typically, one feeds the produced bit-string to an algorithm, a *statistical test* that performs measurements of the quality of the randomness. For instance, a binary string should not contain significantly more 1's that 0's. The three-bit pattern "011" should not be (significantly) more frequent than any other three-bit pattern, etc. Though passing such tests can never be taken as a "proof" of good random properties, it at least gives some confidence in the method used. Indeed, such tests can be performed on the current invention too. See NIST FIPS PUB 140-2 or G. Marsaglia: *DIEHARD Statistical Tests.*

The above mentioned known methods for random bit generation all have disadvantages as further explained in the following.

**Use of time measurements.** Even at microsecond (or higher) resolution, time measurements are seldom adequate by themselves for cryptographic purposes. Suppose that clock measurements, c, are used to generate a key k by applying some function (typically a pseudo random generator) k = g(c). Rather than trying to guess what the (normally quite long) sequence k is, an adversary could much easier try all possibilities for the value c. At a reasonable clock resolution, there could be much fewer possibilities for the relatively short c than there is for a random k. Applying g to each possible c will then enable the adversary to decide k. In some circumstances he perhaps only gets part of k, but this could be bad enough.

In cases where the time measurements are not with respect to real time, but rather timing of events such as network data-packet delays or process timings, an adversary might be able to affect the measurements, for instance by generating traffic to saturate the system, or generating disk request at very short intervals.

**User-supplied randomness.** If the user is prompted to enter something random, experience is that humans tend to use short and very non-random things that could relatively easily be guessed by an attacker. The method of having the user interact by typing at the keyboard or pointing on the screen is very inconvenient and tiresome for the user if more than a few bits are needed.

**Measurement of radio link signal strength.** The "randomness" of such measurements seems rather unstable. At some times, in an open landscape with a mobile terminal fixed in one location, signal strength could be quite constant, at least in the microwave bands. Later, the terminal may be moving around in a car among high buildings, and the values will vary much faster. Recall that to get high quality random bits, it is advisable to use many measurements and to combine them into fewer, but more random bits. On the other hand, for efficiency one would like to make as few measurements as possible in order to produce each random bit. This means that with an "unstable" source as discussed here, it is hard to establish a priori guidelines for the number of measurements needed, and for how to combine them to produce each bit. It is therefore necessary to keep frequently updated real-time statistics of the current behavior of the source used since it is varying.

US patent 7,177,426 B1 discloses an invention for electronic file protection using location and other entropy factors. Embodiments of the invention utilize variances in GPS timing signals as a source for an unpredictable random number.

There is thus a need for a method and arrangement for generation at a mobile device of high quality random number which improves over prior art.

## SUMMARY

The purpose of this invention is to introduce a new way of extracting random numbers that can be used in instruments that currently have no access to any good source of randomness, or, to be used in combination with existing ones to improve randomness.

Since the solution is based on technology that will most likely be available in future mobile phones, and since these devices currently have few (if any) source of good randomness, the solution seems particularly attractive in this case.

The invention proposes a method for extracting random bits that in turn have many applications such as for security. It is based on a reliable, globally available source, for which inexpensive decoding hardware (GPS receivers) is available.

It is particularly suited for mobile devices where the fact that the device moves improves the randomness and where previously few good random sources are available. If indeed sources already are available, they can advantageously be combined with the present invention to improve quality of the randomness, thereby improving degree security in cryptographic applications.

According to the invention, the signal from the Global Positioning System (GPS) satellites is used as a source of random bits. Some benefits arc first of all that "location" is a property that is always applicable to any mobile/fixed device and that GPS is a globally available/accessible standard. Digitized location data is also "semantically meaningful" making it possible to perform on-line tests (or "sanity checks") that the data is not being clogged or jammed by a malicious outsider. This is in contrast to measuring non-semantic, analog quantities such as "signal strength". Moreover, due to the location of the signal source --- a satellite --- the randomness qualities will be quite similar, independently of the (outdoor) location of the receiver. Cost of GPS receivers is constantly decreasing and in the near future, more devices will be equipped with a GPS receiver. In particular, next generation of mobile phones will most likely contain such. Considering that no good source of random bits normally currently is available in such terminals, this will offer an enormous improvement.

A method and apparatus is disclosed for extracting (pseudo)random bits from a GPS receiver, the principle being that unpredictable errors in GPS data (position) can be used as a source of random bits, e.g. for the purpose of generating cryptographic keys.

In the invention a mobile terminal with a GPS receiver can constitute such an apparatus by a more advanced interface to the GPS. Specifically, the GPS signal can be decomposed into signals from distinct satellites and each such signal can in turn be subdivided into special component signals. The independent usage of these individual components from each individual satellite will improve randomness compared to only using the calculated position (longitude/latitude).

According to the invention variations of "latitude" and "longitude" as output by a GPS receiver are used as a source of entropy. For instance, a PC could obtain such data over standard NMEA interface. This means that the data used has already undergone processing in the GPS.

The present invention is defined by independent method claim 1 and independent apparatus claim 4. Preferred embodiments are specified in dependent claims 2, 3, 5 and 6.

## BRIEF DESCRIPTION THE DRAWINGS

In the accompanying drawings, the preferred embodiment of the invention and preferred methods of practicing the invention are illustrated in which:

Figure 1 is a simplified example regarding how to determine the position in 2D space from two satellites.

Figure 2 is a representation of a conventional GPS receiver.

Figure 3 is a representation of a software defined radio GPS receiver.

Figure 4 shows a hardware implementation of the present invention that takes individual component signals into account from different GPS satellites.

Figure 5 illustrates that even if an attacker knows the initial value of a random pool, as the device of the present invention moves, the attackers uncertainty about the random pool will grow.

Figure 6 is a representation of a mobile device of the present invention.

Figure 7 is a block diagram of the present invention.

Figure 8 is a block diagram of another embodiment of the present invention generating a location dependent random value/key.

Figure 9 is another embodiment, basically combining that of Figures 4 and 8.

DETAILED DESCRIPTION

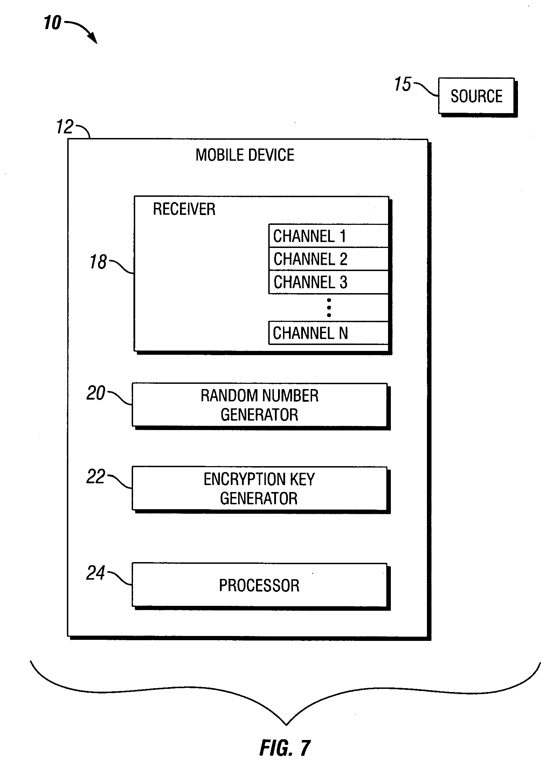

Referring now to the drawings wherein like reference numerals refer to similar or identical parts throughout the several views, and more specifically to figures 7, 8 and 9 thereof, there is shown a communications=s apparatus 10. The apparatus 10 comprises a mobile device 12. Examples of mobile devices include handheld, portable or vehicle mounted: telephones, 2-way radios, PDAs, media players, PCs, navigation equipment, etc. The apparatus 10 comprises means 14 for receiving at the mobile device 12 a plurality of signals carrying information including received signals which provides randomly varying data related to location of the mobile device 12. The apparatus 10 comprises means 16 for estimating signal entropy for at least one of the received signals in dependence of location where the signals are received by the mobile device 12, selecting the at least one entropy estimated signal having estimated entropy exceeding a preset limit, generating from the at least one entropy estimated signal a random number, and using the random number to establish cryptographic operations with the transmitted signals.

Preferably, the receiving means 14 is adapted for receiving at least an information source 15. The apparatus 10 further comprises means for generating said signals by separating at least an information source into component signals.

The present invention pertains to a communication=s apparatus 10. The apparatus 10 comprises a mobile device 12. The apparatus 10 comprises a receiver 18 for receiving at the mobile device 12 a plurality of signals carrying information including received signals which provides randomly varying data related to location of the mobile device 12. The apparatus 10 comprises a random number generator 20 which generates a random number as a function of the data. The apparatus 10 comprises a cryptographic key generator 22 which generates a cryptographic key using the random number.

Preferably, the apparatus 10 includes a processor 24 which processes the data to determine a stable location of the mobile device 12. The number generator preferably generates the random number with the stable location so the key generator 22 generates a location dependent cryptographic key. Preferably, the apparatus 10 has a second receiver 19, and the key generator 22 adapts the cryptographic key for decryption of received data. The key generator 22 preferably regularly updates the cryptographic key. The receiver 18 dissects the received signals into their components. The receiver 18 has at least 3 channels and dissects the received signals into their components of Almanac (A), Ephemeris (E), and Code (C). Preferably, the processor 24 determines the location as a function of A, E and C. The receiver 18 is a GPS receiver 18 and the received signals include a globally available signal from a GPS.

The present invention pertains to a method to establish at a mobile device 12 a random number for cryptographic operations. The method comprises the steps of receiving at the mobile device 12 a plurality of signals carrying information including received signals which provides randomly varying data related to location of the mobile device 12. There is the step of estimating signal entropy for at least one of the received signals in dependence of location where the signals are received by the mobile device 12. There is the step of selecting the at least one entropy estimated signal having estimated entropy satisfying a predetermined property. There is the step of generating from the at least one entropy estimated signal the random number. There is the step of receiving a globally available signal as part of the plurality of signals. There is preferably the step of moving the mobile device 12 whereby repeated samples are made from the globally available signal for determining at the mobile device 12 a device specific random number. Preferably, there are the steps of processing the data to determine a stable location of the mobile device 12, and wherein the generating step includes the step of generating the random number with the stable location to obtain a location dependent cryptographic key.

There is preferably the step of adapting the cryptographic key for decryption of received data. Preferably, there is the step of regularly updating the cryptographic key. There is the step of separating the received signals into their components and treating their components as independent signals. The separating step includes the step of separating the received signals into their components of Almanac (A), Ephemeris (E), and Code (C). There is preferably the step of determining the location as a function of A, E and C by the mobile device 12. The selecting step includes the step of selecting the at least one entropy estimated signal having a predetermined property. The predetermined property is preferably that of estimated entropy satisfying a preset limit.

In the operation of the invention, to better understand how and why the invention works, a short presentation is provided of the GPS system. However, it is first pointed out that the invention is really "the opposite" of a number of existing apparatuses. Normally, the fact that the GPS signal varies randomly is a highly undesirable property, since it makes high precision positioning more difficult. It is understood that, although much effort is directed to limit uncertainty associated with GPS location generation, there will always remain such uncertainty which is advantageously utilized according to the invention for generation of random number. In the following a thorough analysis is made of the GPS system for finding facts about the system on which the present invention may be founded to provide random numbers with better and more useful properties than those produced by direct positioning.

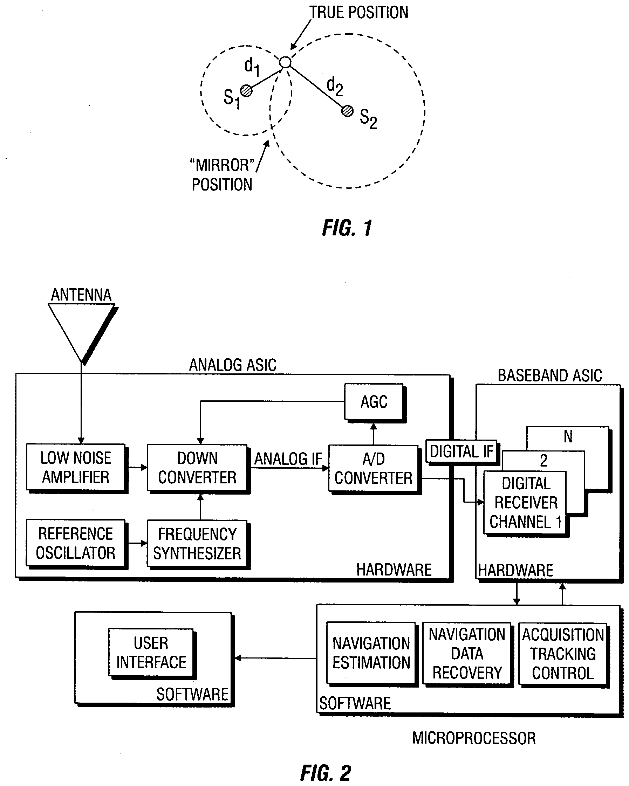

GPS consists of 24 satellites in orbits approximately 11,000 nautical miles up, and a small number of ground control stations. From any point on earth and at any time, at least 5 satellites are "visible". Positioning is determined by "triangulation" in 3D-space. This, in turn, is achieved by measuring the distance from the satellites to the GPS receiver 18. If one knows where a GPS satellite, $S_1$, is and the distance d to it, this narrows down the possible locations of the receiver 18 to the surface of a sphere, $B(d_1, S_1)$, of radius $d_1$, centered at the satellite. If, in addition, the distance is obtained, say $d_2$, to a second satellite, $S_2$, the position must be somewhere on the intersection $B(d_1, S_1) \cap B(d_2, S_2)$. This therefore determines the position to within a certain circle in space. If a third measurement of the distance to a third satellite is done, $S_3$, there are only two possible location points $p_1$, $p_2$ corresponding to the intersection between the circle $B(d_1, S_1) \cap B(d_2, S_2)$, and the sphere $B(d_3, S_3)$. Normally, one of $p_1$, $p_2$ will be inconsistent (a point that is not on the earth's surface) and can therefore be discarded. Hence, the signal from at least 3 GPS satellites and an accurate knowledge of their current position is enough to determine the position. A simplified example, determining the position in 2-D space from two satellites is shown in the figure 1.

Assume the position of the satellite is known. Then, the distance d can be determined by the formula d = v t where v is the velocity of the radio signal transmitted from the satellite and t is the time for the signal to reach the receiver 18. It is immediately noted that there are clearly two sources of errors here:

1. the accuracy of the timing measurements
2. variations in the propagation speed.

These errors cause the determined position to vary more or less randomly.

Clearly, v can be approximated by the speed of light in the medium, but how is t measured? One of the signals transmitted from the satellite is a binary sequence, known as the *Pseudo Random Code* (PRC). By comparing the phase of the received PRC to a copy of the PRC, internal generated by the GPS receiver 18, an estimate for t can be calculated.

The phase of the signal transmitted by the satellites is determined by a high precision (+/- 3ns) on-board atomic clock. To determine the phase of the GPS receiver's 18 internally generated PRC it would seem that an equally accurate clock is needed in the receiver 18. Instead, a relatively low-cost clock is used which is frequently adjusted by taking into account the received signal from a *fourth* satellite. Recall that the goal is to solve an equation system determining the receiver's position in 3D space, and that three equations normally would be enough to solve the system. However, if also a fourth is added, the system becomes over-determined and a unique solution exists only if the receiver's 18 clock is in precise synchronization with the satellite's clocks. Thus, adding the fourth satellite signal enables the receiver 18 to adjust its clock accordingly.

In summary: errors introduced into the distance measurement are due to variations of radio signal propagation speed from the four different satellites, and inaccuracies in the clocks.

The satellites were placed in very precise orbits, enabling a high degree of accuracy in determining their position at any given time. Still, due to gravitational pull from other objects, positions do vary. A set of control stations on the ground monitor satellite positions and send a correction signal up to the satellite. This signal is transmitted back to GPS receivers 18 on earth together with the PRC. Of course there is still a small error since precision is finite.

Since the fact that the GPS measurements vary will be used, it is important to understand how errors/variations occur. In summary, by the above discussion, the following four main factors introduce random errors in the determined position.

Radio propagation errors:

• the propagation speed of the GPS signal varies as it passes through the ionosphere and the troposphere
• multipath error

Clock inaccuracy: not even atomic clocks are exact
Satellite positions: are never completely accurate

Geometric Dilution of Precision (GDOP): Not all satellite positions in the sky are equally good. Preferably, satellites should be at almost "right angles" to the receiver 18 on the ground. If all used satellites are in a small region of the sky, the different receiver-satellite angles will be very narrow, and precision is degraded. Typically this increases the error by a factor of 3 to 6.

Note: until quite recently (May 2000), the US Department of Defense introduced "noise" into the satellite's clock data, so called Selective Availability (SA), to degrade accuracy for non-military applications. This has, however, now been removed.

Typically, the average error (in latitude/longitude) for a good receiver 18 is about +/- 6m, adding the errors above. Vertical accuracy is about 50% worse. Most receivers 18 can display the position to a resolution of one thousandth of an arc minute. Using the fact that the earth's diameter is approximately 40,073km, the least significant digits correspond to a resolution of +/- 1.85m, respectively. Hence, with a variation of +/- 6m, this implies that the least significant digit varies by about +/- 3.2 "units". This means that the "entropy" per measurement is close to about 2 bits.

Most receivers 18 measure once per second. This means that entropy sufficient for a 128-bit key will be collected in just above 2 minutes. It is extremely rare that keys need to be generated with much higher frequency. A "pool" of collected randomness could be maintained as a background process as is illustrated below.

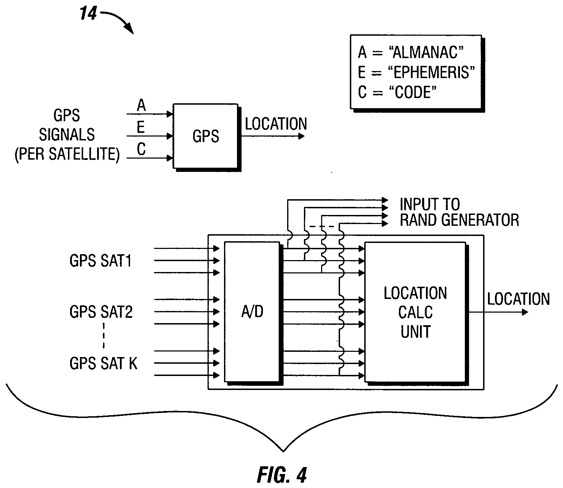

Preferably, the measurements should be made on "raw" data without any correction, which may mean that a special interface to the GPS receiver 18 should be used. Figure 4 shows a GPS receiver and how interfaces to raw/unprocessed signals (A, E, C) from each satellite is added and used as inputs for the random number generation, thus bypassing the location calculation of the GPS receiver.

The invention uses the GPS signals as a source of randomness. Exactly how to obtain randomness can be made in a multitude of ways. As illustrated by examples, any signal with random behavior can be used, carefully considering security aspects when used for cryptographic purposes. Some explicit suggestions that apply to the special case of GPS are now given.

By a GPS measurement, it is meant an observation of the outcome, x, of a random variable X, distributed according to one of the following:

1. Sampling of the GPS receiver's 18 built-in clock.
2. Signal reception followed by measurement of the PRC value (0 or 1).
3. Signal reception followed by current signal travel time calculation from a satellite S (which normally includes 1 and 2).
4. Signal reception followed by current distance calculation from a satellite S (typically involving 1 and 2 and 3).
5. Signal reception followed by computation of the current clock adjustment factor for the built in clock of the GPS receiver 18.
6. Combination of one or more of the above steps, involving one or more satellites, followed by a current position calculation in 2- or 3-dimensions with, or preferably without, use of differential GPS.
7. One of the above measurements/calculations, occurring at a time determined by an internal, or, an external clock.
8. One of the above measurements/calculations, occurring at a time determined by an event triggered by the user, or, by another physical process, external to the GPS receiver 18.
9. Some GPS receivers 18 have built in speed calculations which can be used.
10. One or more of the above, resulting in observations $x_1$, $x_2$, ..., $x_n$, which are then combined by a function f to produce a value $x = f(x_1, x_2, ..., x_n)$.

Below, let x be a GPS measurement as defined above. This will typically be a floating point value, distributed according to a (possibly unknown) distribution D on a set I, typically an interval I = [a,b]. Some examples are now provided how to convert this into a binary 0/1-value. Generalizations to other discrete distributions are straightforward.

1. If D is at least approximately known, fix any subset of $J \subseteq I$ so that $Pr[x \in J] \approx \frac{1}{2}$, and then output "1" if $x \in J$; "0" otherwise. As an example, if I is the interval [a,b], determine t, $a \leq t \leq b$, with $J_t = [a,t]$ so that $Pr[x \in J_t] = \frac{1}{2}$. If D is not a priori known, taking a number of samples of x will give an approximation for the distribution. Such sampling may need to be done at regular intervals if the distribution changes, perhaps due to different reception conditions.
2. Regardless of whether D is known or not, the following method can be used. (It is assumed x is a floating-point value.) Take a few of the digits in the decimal expansion of x (say the 3 least significant digits). Compute their sum modulo 10, and output a "0" if the sum is less than 5, "1" otherwise.

There are many more ways of doing it. Having extracted a few "slightly" random bits in one or more of these ways, randomness can be improved using the addition trick modulo 2 previously mentioned, hashing, or any other suitable method. In summary, any of the above method(s) (or combinations thereof) for extracting random data from the GPS system, gives rise to a method which in the sequel will be referred to as collect_random_data(GPS).

The method collect_random_data(GPS) can be further refined/improved as will now be discussed. The position (longitude/latitude) values, as output by a GPS receiver 18, are calculated, using some deterministic function, L, applied to data received from the GPS satellite system over three distinct channels:

1. Almanac: coarse date/time information from the satellite.
2. Ephemeris: the (approximate) location of the satellite in the sky (as estimated by the satellite itself).
3. The above mentioned PRC which is either an A-code, or, a P-code: these are signals having a random, but repeating pattern. That is, there exists a T such that for t < T, for any integer c, f(t+cT) = f(t). (The value "c" roughly corresponds to the value provided by channel 1.)

There are 24 GPS satellites, each providing the 3 channels above. A GPS receiver 18 typically supports receiving at least 4 satellites in parallel (3 is the absolute minimum to determine receiver 18 position), but up to twenty is not uncommon. This means that between 12 and 60 varying signal sources are available for random number generation purposes.

The principle is that the GPS receiver 18 uses channel 1 and 3 to determine the distance, d, from the satellite. Given the data in channel 3, the receiver 18 can approximate its position on a 3-D sphere, said sphere being centered as stated by channel 2. Now, given (at least 3, preferably 4) such measurements from 3 (or 4) satellites, the "intersection" of these spheres determine the receiver 18 position within some error. (Note that if only three satellites are available, a fourth satellite can be "simulated", assumed located at the center of the earth and with the receiver 18 being at a given distance from it, determined by the earth radius.) To analyze error/uncertainty, it is necessary to study how these channels are used in more detail. First of all, it is evident that the first channel probably has very little error. The only source of error is probably related to the dependency between this channel and the third channel: the first channel is a sort of "roll-over counter" telling the receiver 18 how many whole periods of the third channel that has occurred.

The second channel clearly has errors, as it is impossible for a satellite to determine its position with perfect accuracy. (As mentioned, ground control stations keep the satellites updated and try to compensate for error / drift, but there is still a varying error.) The navigation message from a satellite is sent out only every 12.5 minutes. In reality, the data contained in these messages tend to be "out of date" by an even larger amount. Consider the case when a GPS satellite is boosted back into a proper orbit; for some time following the maneuver, the receiver's 18 calculation of the satellite's position will be incorrect until it receives another ephemeris update.

The periodic sequence occurring in the third channel is deterministic and its "pattern" is known in advance by the receiver 18. By generating the same sequence (a 0/1, random-looking pattern) locally in the receiver 18, and "sliding" said sequence until it coincides with that received from the satellite, the receiver 18 can determine the "offset" of its own clock with that of the satellite, i.e. it can measure the time it took for the signal to reach the receiver 18. Given the speed of the signal, d can be estimated. The accuracy of this measurement depends on the period-length of this sequence and the bit rate: since an alignment error of +/- 0.5 "symbol time" of the A or P-sequence is the best one can hope for, a higher bit-rate (shorter symbol time) means higher accuracy. Also, since the code is only uniquely determined within the period length, a longer period means higher accuracy. These two factors, the period length and symbol rate, is precisely what distinguishes the (coarse) A-code from the (fine-grained) P-code. (As mentioned, until recently, the P-code was encrypted and only available to military applications.)

There are also some general error sources applying to all channels:

1. Signal speed: the speed of light depends on the medium, which in turn depends on local/temporary characteristics in the earth's ionosphere, troposphere, etc.
2. Accuracy of the receiver's 18 own clock.
3. Multi-path distortion.
4. Numerical / rounding errors in calculations.
5. Error in satellite's internal clock. (The clocks are extremely accurate, but suffer from some clock drift.)
6. Relativistic effects, due to the satellite moving at high speed and the gravity of the earth.

It is noticed that the 6th error source is not negligible: the satellites internal clocks had an intentionally slightly lower frequency when on the ground, the idea being that they would "speed-up" by relativistic effects in earth-orbit. It has been estimated that if these effects were neglected, an additional +/- 15m in position errors could occur in the worst case.)

By adding individual data interfaces to the "raw" unprocessed data (A, E, C) from each GPS satellite, bypassing the location calculation unit as indicated in Figure 4, quality of randomness can be improved as will now be discussed. Consider that there are thus four random variables occurring from one satellite as input to the random generator:

• A[i]: almanac data from satellite number i.

- E[i]: ephemeris from satellite i.
- C[i]: code sequence from satellite i (or, to be precise, the "delay" or "offset" of this sequence).
- R: represent (for simplicity) any receiver-local errors as a total accumulated error, R.

If there is now data from, for example, 3 satellites, the GPS receiver 14 will now apply some deterministic function, L, to the inputs:

$$L(A[1], E[1], C[1], A[2], E[2], C[2], A[3], E[3], C[3], R),$$

which will produce a latitude/longitude, displayed on screen the GPS device 14. If all the inputs were exact and R = 0, the exact position would be output.

The observation is now that for any random variable, X, and for any deterministic function, f, it is known (and can be mathematically proven) that

$$H(X) \geq H(f(X)),$$

where H is the entropy (defined below), i.e. "deterministic processing can never increase entropy, at best it can keep the entropy". This implies that *only* working with L(...) is probably not the best idea since entropy may already have been lost while producing L(...).

One embodiment of the invention is based on the last observation and can be viewed as further improving on the method collect_random_data(GPS) above. While variation/unpredictability of L(A[1], E[1], C[1], A[2], E[2], C[2], A[3], E[3], C[3], R) has previously been discussed, it is now necessary to focus on variation/unpredictability of each of A[1], E[1], C[1], A[2], E[2], C[2], A[3], E[3], C[3], R, etc. (The value R may, however, be difficult to obtain as it is "implicit".) I.e. rather than assuming that only access to the final calculated position is available, it is assumed that access (and process) the inputs that gave rise to the position are also available in the modified GPS receiver 14. As discussed this could actually improve the entropy.

An apparatus 10 is now disclosed for implementing one embodiment of the invention.

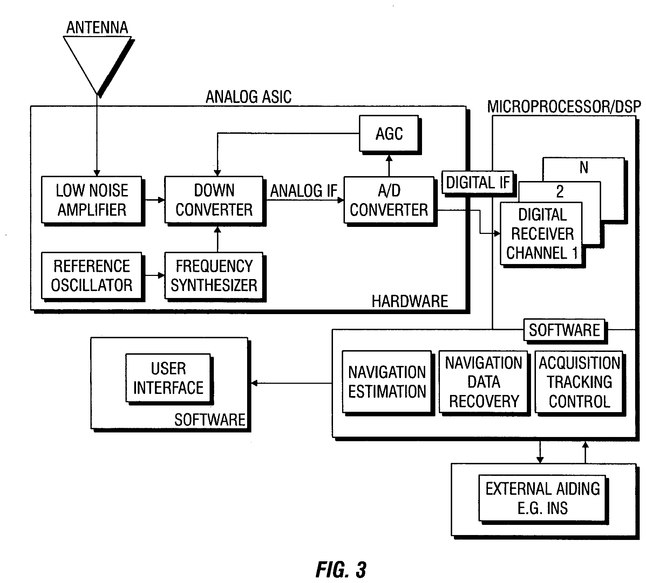

In a preferred embodiment of the modified GPS receiver of Figure 4, access to the individual channels/sources is provided by an "API" towards lower-layer functions of the GPS receiver 18. This is for instance fully in line with new trends of SDR (software defined radio). An apparatus 10 is made up of a mobile terminal and comprises a GPS receiver 18 with API to low-level, individual GPS signal channels. Figures 2 and 3 show the difference between a "conventional" GPS receiver 18 and an SDR GPS.

As can be seen, the channels are now more easily accessed by an API as they are implemented in software/DSP.

Some practical issues need to be considered for the apparatus 10 above. A main aspect is that GPS has very poor (probably zero) coverage indoors. The apparatus 10 may now utilize any of the various embodiments of collect_random_data(GPS) from above to operate as follows.

```
1. At power-up, set
       random_pool = 0;
       total_entropy = 0;
2. If GPS-module receives proper signal then
       x = collect_random_data(GPS); /* as discussed above */
       e = estimated_entropy(x); /* based on heuristic or statistic sampling */ /
       random_pool = hash(random_pool, x); /* add new bits to old */
       total_entropy = min(size(random_pool), e + total_entropy);
   end;
   If other source(s) is/are available then
       ... /* do the same, but using "other source" to update pool */
   end;
3. Wait (delay);
4. Go to 2.
```

(The rationale for the algorithm will be elaborated below.)

If GPS is lost, it will automatically use another source, if available. To determine whether the "GPS receives proper signal", one of the following approaches may be used:

- Can the A- or P-code pattern produced be recognized at all?

9

- Does the "almanac" signal produce a "reasonable" value?
- Does the "L" function output a "reasonable" longitude/latitude?
- Statistic tests (see below).
- Etc.

Note that these test conditions, since they are applied to digitized, information carrying data, also may serve to avoid saturation/jamming problems with traditional approaches of sampling analog sources such as signal strength measurements.

Whenever random data is needed, the apparatus 10 performs the steps:

```
if requested_number_of_random_bits <= total_entropy then
  random_bits = hash(random_pool);
  update(random_pool); /* e.g. "hash" the pool or "delete" bits from it */
  total_entropy = total_entropy - requested_number_of_key_bits;
end else
  print("Warning, not enough random bits available");
```

As an alternative to the "warning", the available bits in the pool (if at least some) could be used as seed to pseudo-random generator, rand() and use the result of that.

In another embodiment, the invention is used for cryptographic (e.g. encryption) key generation. While the invention is, as mentioned, also applicable to asymmetric key generation, to illustrate the invention it is only necessary to focus on the generation of random symmetric keys which, if needed, can serve as seed or be further processed for asymmetric key generation as discussed in the introduction. As also previously discussed, sharing/exchanging the key with other parties is out of scope of the invention.

User A generates a key, k, to be used for symmetric encryption (or decryption). The key is generated by, according to any of the above embodiments, extracting a few (typically about 100) random bits and using them (or a function thereof) as the key. Here it is not only necessary that the key bits are unpredictable, it must not be possible for an adversary to deduce their value a posteriori, since the secrecy of messages encrypted must possibly be preserved for years to come. Hence, the TTP solution above is not an option here.

The inventive method is, however, still a kind of TTP solution. A source that is publicly available is used, though different users will at any given instant get different bits from it. The source is beyond the control of any individual.

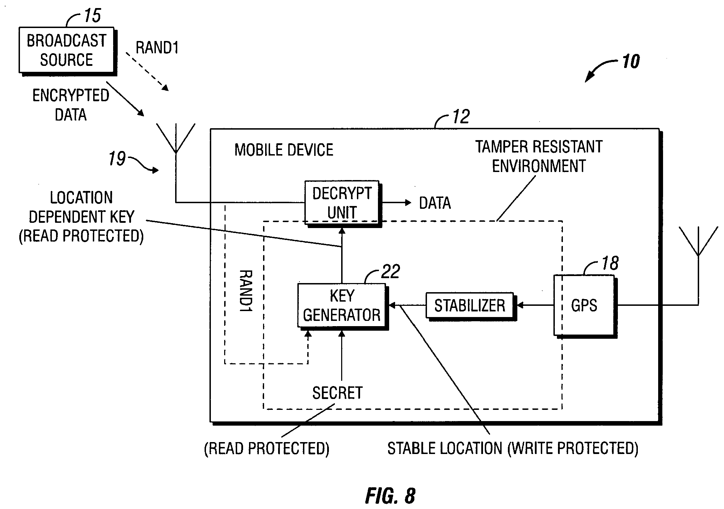

With reference to Figure 8, an alternative embodiment the techniques as described is combined into a more stable GPS measurement to generate a "location dependent key". While the GPS obtained location shows variations, one can for instance "truncate" longitude/latitude by disregarding some decimals. This gives a stable, but location dependent value. If the mobile device has a tamper resistant implementation suitable parts of the GPS receiver, and a similarly tamper resistant connection between the GPS receiver and a key generator, this means that the terminal is able to generate a location dependent key, the value of which the user cannot change or affect. This has applications in a scenario where some source broadcasts information that should only be possible to decrypt by users in a specific location or region, e.g. a military application or satellite TV application. This is shown in Figure 8. For security, however, the key should preferably not depend only on the stable location as the key would then become predictable and usable also by parties not located in the presumed location. To this end, a secret value, known to the broadcast source and securely stored in the tamper resistant module is also used as input to the key generation. Note that tamper resistant here thus means that the stable location input from the GPS module should not be possible to change by the end user and the value of the secret should not be possible to read out by the end user (or any other 3rd party). Preferably, a random nonce (RAND1) provided by the broadcast source is also use to assure key freshness. The key generation function may for instance be any suitable cryptographic function.

Note that the need for the tamper resistant channel between the GPS module and the key generator is due to need of preventing the user from "tampering" with his/her location, providing false information. An alternative would be to use authentication of the signals from the GPS satellites, e.g. using electronic signatures. However, the current GPS system does not provide such means.

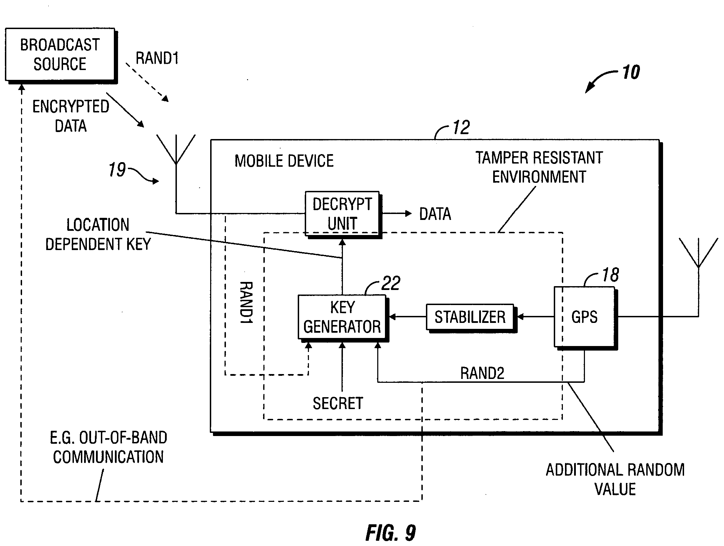

A slightly different embodiment is shown in Figure 9. The difference to the previous embodiment is that besides the secret and the stable location, also a random value (RAND2), generated locally in the mobile device is also used as input to the key generation. This random value could for instance be generated by extracting random bits from the (A, E, C) channels of the GPS system as previously discussed. Note that in this case, the RAND2 value will not be a priori known by the broadcast source and must thus be communicated to the source by other out-of-band or cryptographic means. While this embodiment shows better security, it thus has the drawback that the receiver may not be able to keep "radio silence".

A more mathematical/formal definition of the last two embodiments is now provided in terms of the following definitions (refer to figures 8 and 9):

- X the currently measured "vector" of current GPS system data (e.g. A, E, C, etc) by the GPS receiver.
- L(X) is the "standard" function in the GPS receiver that converts X into latitude/longitude.
- R(X) is the function that extracts random data from X according to the first embodiment (i.e. extract_random_bits() above).
- S() is the "stabilizer" function of figures 8 and 9 in accordance with the 2nd embodiment below (e.g. decimal point truncation).
- KGF() is the key generation function of figures 8 and 9 (embodiment 2/3).

Then the following "formulae" results:

Embodiment of Figure 8: compute KGF(secret, S(L(X)) [, RAND1}) /* [ ] denotes an optional input */
Embodiment of Figure 9: compute KGF(secret, S(L(X)), R(x) [, RAND1})

In one embodiment the invention is applied in a user identification scheme. This is normally implemented as a challenge/response protocol of the following form. B wants to prove is identity to A.

| User A | | User B |
|---|---|---|
| | ← Q (credentials) | |
| choose a random | | |
| challenge, c | c → | |
| | | compute response |
| | ← r | r = s(c,Q) |
| | | (e.g. a digital signature) |
| accept if r is a valid | | |
| response w.r.t. c,Q | | |

The idea behind such protocols is that it is not until the time that c becomes known to B that he can start to prepare the response, r, and that the response computation is a computationally very hard problem for anyone, except the true user knowing some secret in relation to Q. However, if B could predict what challenge c it will get, seconds, or maybe even hours in advance, it could be possible to fake the response after some computation or to reuse computations done during earlier executions of the protocol. With current state-of-the-art algorithms, it is necessary that B gets (at least most of) c several months in advance to do this. With this in mind, a simple, though not always practical way to implement the challenge generator would be to have a trusted third party (TTP) flip a coin and publicly announce the outcome.

In operation, variations of "latitude" and "longitude" are used as output by a GPS receiver 18 as a source of entropy. For instance, a PC could obtain such data over standard NMEA interface. This means that the data used has already undergone processing in the GPS.

There are two threats to consider to a GPS/location dependent random number generator. An adversary might be able to predict, in advance, what the extracted random bits will be, or, he is able to tell a posteriori, which random bits were extracted. The former is the most serious threat. However, it is also less likely. Exactly how serious the threats are depends on what we will use the random bits for; *public* or *private* randomness. As an example of the public randomness setting the above usage is in a challenge/response protocol, whereas the key generation embodiment is an example of private randomness.

Any threat to the GPS-extraction scheme in the public randomness setting (if implemented wisely) is arguably small since only the (unlikely) threat of prediction is relevant.

Consider now the more likely threat of a posteriori determination of private random bits. Suppose that an adversary is in close proximity to the user A, where A is just about to extract random bits that in addition must be kept secret, e.g. for key generation purposes. The fact that the adversary is close to A makes his reception of the GPS signal correlated with that of A, (assuming their receivers 18 have similar characteristics). One *main* source of uncertainty for the adversary is in fact *when* the measurements are made. Thus, it is obvious that the method is at least as good as the aforementioned technique of extracting randomness from the internal clock.

Even if a skilled "attacker" would be able to predict exactly the GPS signal values received by a user in a nearby location, it would be extremely difficult to track a moving terminal, while at the same time, making sure that *every* measurement made in the tracked terminal could be known to the nearby attacker. Consider the main "loop" of the algorithm above.

```
random pool0 = 0;
 total_entropy = 0;
j = 1;
If GPS-module receives proper signal then
      xj = collect_random_data(GPS); /* as discussed above */
      e = estimated_entropy(xj); /* based on heuristic or statistic sampling */
       random_poolj = hash(random_poolj-1, xj); /* add new bits to old */
       total_entropy = min(size(random_poolj), e + total_entropy);
      j = j + 1;
  end;
```

The "suffix" j has been added to the measurement values x to indicate that the j:th measurement, $x_j$, is performed when the user/device 12 is located in position $p_j$. In order for an "outside" attacker, located at a nearby location $p_j'$, to have a "consistent" value of the random_pool, each and every $x_j$ estimated by the attacker must be equal to $x_j$ the obtained by the device 12. Moreover, if the hash function is chosen properly, a difference in a few $x_j$ values will show an "avalanche" effect, and the attacker's estimate on the value of the random pool will very rapidly diverge from the correct one. That is, even if each $x_j$ is incorrect only by one or two binary bits these errors will rapidly accumulate. Specifically, if n by the attacker incorrectly estimated $x_j$ values occur, the relative entropy of the random_pool (as seen by an outside attacker) would be (at least) about n bits.

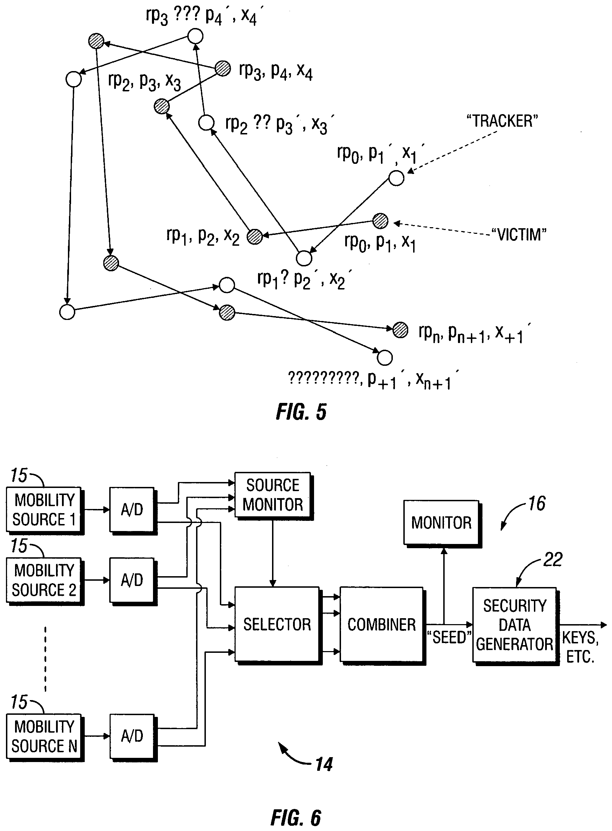

Figure 5 illustrates that even if the tracker knows the initial value of the random_pool (denoted $rp_0$), as the device 12 moves, the attacker's "uncertainty" about $rp_j$ will grow (indicated by increasing number of "?").

In the situation where a hostile has a mobile device 12 like that of the user, and if the hostile could predict the movements, that would (intuitively) mean that at time T, the hostile knows where the user will be at time T+1. However, if this is the case, the hostile cannot be sure a) whether the user's terminal will even "sample" the source (exactly) at time T+1 (it might be done at time T+1+"delta") b) what the "result" of the sample would be, if performed.

Of course, the hostile is probably likely to have some rough "approximation" of (a) and (b) which means that he may be able to obtain some "correlated" values. But again, as the terminal makes further measurements at time T+2, T+3, ...., (while moving) the "avalanche" effect will make the hostile's information less and less correlated with the "true" value in the terminal.

If the hostile cannot predict the movements, the hostile may be able to "track" the user. This is probably more serious, since, in this case, the hostile can be assumed to know (exactly) where the mobile device 12 was located at time T, T+1, ... (Suppose the hostile follows the terminal at a fixed distance D, the hostile can then at each instant "observe" where the mobile device 12 is located.) Nevertheless, the hostile would again encounter (a). The hostile would to some extent have less issues with (b). But, as elaborated herein, even if we know the exact location of the mobile device 12 is known, this is typically not the same as the mobile device's 12 GPS receiver 18 will tell you, due to the (small, but still) inherent errors in the GSP system.

```
Going back to the algorithm which had the following structure
1. If GPS-module receives proper signal then
    ... /* collect data from GPS */
   end;
   if other source(s) is/are available then
   ... /* do the same, but using "other source" to update random pool */
   end;
```

It is clear that if there are other mobility-related sources that can be used as "other source", the randomness produced will be even better. The tracker would need not only to "guess" the GPS data at location $p_j$ but also the other sources' provided data. Examples of such other sources (typically available in a mobile terminal) are:

- Network (cell) ID
- Current radio characteristics (signal strength, bit-error rate, data throughput, etc)
- Data obtained from nearby NFC/RFID tags/sensors

However, as noted it is important of course not to rely too much on "jammed" sources, e.g. a signal so strong that it blocks the receiver 18 at constant (max) signal strength. This is the reason for the "if source available"-test. This test, or "source monitor", can advantageously be based on some form of entropy estimation (method for entropy estimation are known in the art and will be exemplified below). Put together, this brings the apparatus 10 shown in Figure 6 as part of a mobile terminal.

The different sources typically undergo A/D conversion. The source monitor (constantly) estimates the randomness/entropy of the sources and selects "good" ones in a combiner (e.g. the "hash" function above). The output of this combiner (the above mentioned "pool") may in turn be further monitored (this "secondary" monitoring is known in the art, e.g. in ISO/IEC JTC 1 18031).

Several approaches are possible for entropy estimation methods.

**"Zero-one" approach**

In this very simple approach, one just checks if the source is "jammed" or not. For instance, whether the signal produces only binary zeros (or only ones). This gives a very crude estimate, basically telling if there is *any* entropy at all.

A generalization leads to the concept of *statistical tests.* These are used to determine if a signal has "random qualities" or not. A few examples:

- **Frequency test:** here one checks if the fraction of ones (and zeros) is roughly what it should be, i.e. 0.5.
- **Serial test:** this counts the number of occurrences of the two-bit patterns (00, 00, 10, 11) which should be about 0.25. This can be generalized to t-bit patterns in which case it is usually referred to as "Poker test".
- **Runs test:** this test checks for contiguous blocks of only "000000..." or "1111..." up to length n for some n, e.g. n = 16.

These and other statistical tests are described in more detail in e.g. "Handbook of Applied Cryptography" by Menezes, Van Oorschot, and Vanstone, incorporated by reference herein, or, in the US NIST FIPS PUB 140 standard, incorporated by reference herein. Again, these tests only gives a "qualitative" rather than a "quantitative" estimation, but gives somewhat higher confidence than the simple "jamming detection" approach.

In summary, these test(s) (any or all) could be applied and the source would be considered "useful" if it passes the test(s).

For Direct Entropy Estimation, assume the source, X, produces outputs in the set $\{x_1, x_2, .... x_N\}$, e.g. $x_i$ is the lexicographically i:th binary string of length $n = \log_2 N$ (i.e. $N = 2^n$). Assume also that we have probabilities $\text{Prob}[X = x_i] = p_i$. The *Shannon entropy* of X is defined as

$$H(X) = -( p_1 * \log_2 p_1 + p_2 * \log_2 p_2 + \ldots + p_N * \log_2 p_N)$$

When feasible (i.e. when N is not too large), the values (relative frequencies) $p_i$ can (with good accuracy) be approximated by sampling the source, giving a good estimate of the real entropy. Specifically, the source is sampled M times, let $n_j$ be the number of observations of $x_j$ and estimate $p_j$ by $p_j \approx n_j /M$. As is well known, this converges to $p_j$ as M increases.

Other notions of entropy, e.g. *min-entropy* and *Renyi-entropi* also are relevant and can be computed by similar formulas.

The measure H(X) can be interpreted as the maximum achievable compression of the source by a (hypothetical) optimal data compression algorithm. Instead, a good, "practical" compression algorithm can be used (e.g. Lempel-Ziv, Huffman, etc) to estimate how much the source can be compressed, thus providing an approximation (an upper bound) of the entropy H(X).

There is also a statistical test, known as *Maurer's universal test* which, although being a statistical test, produces a quantitative real-numbered value which is closely related to the actual entropy of the source. (This test is also described in "Handbook of Applied Cryptography", incorporated by reference herein.)

Notice that the above entropy estimations can be interpreted as property testing of randomly varying source, e.g.

- "The source has Shannon entropy at least e".
- "The source passes statistical test T",
- etc.

**Claims**

1. A method to establish at a mobile device (12) a random number for cryptographic operations comprising the steps of:

   receiving at the mobile device a plurality of Global Positioning System, GPS, signals (15);

separating each of the received GPS signals into its three components of Almanac (A), Ephemeris (E) and Code (C) and treating these three components as independent signals;

estimating an entropy for the independent signals in dependence of location where the GPS signals are received by the mobile device;

selecting at least one of the independent signals having an estimated entropy satisfying a predetermined property; and

generating from the selected at least one of the independent signals the random number.

2. The method as described in claim 1 wherein said predetermined property is that of having the estimated entropy satisfying a preset limit.

3. The method as described in claim 1 wherein said predetermined property is that of passing at least one statistical test.

4. A communications apparatus (10) comprising:

a mobile device (12);

means (14) for receiving at the mobile device a plurality of Global Positioning System, GPS, signals (15), wherein the means (14) is arranged to separate each of the received GPS signals into its three components of Almanac (A), Ephemeris (E) and Code (C), so that these components can be treated as independent signals; and

means (16) for estimating an entropy for the independent signals in dependence of location where the GPS signals are received by the mobile device, selecting at least one of the independent signals having an estimated entropy satisfying a predetermined property, and generating from the selected at least one of the independent signals a random number for cryptographic operations.

5. The communications apparatus according to claim 5, wherein said predetermined property is that of having the estimated entropy satisfying a preset limit.

6. The communications apparatus according to claim 5, wherein said predetermined property is that of passing at least one statistical test.

**Patentansprüche**

1. Verfahren, um eine Zufallszahl für Verschlüsselungsvorgänge an einem Mobilgerät (12) zu erzeugen, wobei das Verfahren die folgenden Schritte umfasst:

Empfangen einer Vielzahl von Global-Positioning-System-(GPS-)Signalen (15) an dem Mobilgerät;

Aufteilen jedes der empfangenen GPS-Signale in seine drei Komponenten Almanach (A), Ephemeride (E) und Code (C) und Behandeln dieser drei Komponenten als unabhängige Signale;

Schätzen einer Entropie für die unabhängigen Signale in Abhängigkeit von dem Ort, an dem die GPS-Signale von dem Mobilgerät empfangen werden;

Auswählen von zumindest einem der unabhängigen Signale, das eine geschätzte Entropie aufweist, die einer vorgegebenen Eigenschaft entspricht; und

Generieren der Zufallszahl aus dem ausgewählten zumindest einen der unabhängigen Signale.

2. Verfahren nach Anspruch 1, wobei die vorbestimmte Eigenschaft im Aufweisen der geschätzten Entropie besteht, die einem vorgegebenen Grenzwert entspricht.

3. Verfahren nach Anspruch 1, wobei die vorbestimmte Eigenschaft darin besteht, dass zumindest ein statistischer Test bestanden wird.

4. Kommunikationsvorrichtung (10), umfassend:

ein Mobilgerät (12);

ein Mittel (14) zum Empfang einer Vielzahl von Global-Positioning-System-(GPS-)Signalen (15) an dem Mobilgerät, wobei das Mittel (14) angeordnet ist, um jedes der empfangenen GPS-Signale in seine drei Komponenten Almanach (A), Ephemeride (E) und Code (C) aufzuteilen, sodass die Komponenten als unabhängige Signale behandelt werden können; und

ein Mittel (16) zum Bestimmen einer Entropie für die unabhängigen Signale in Abhängigkeit von dem Ort, an dem die GPS-Signale von dem Mobilgerät empfangen werden, Auswählen von zumindest einem der unabhängigen Signale, das eine geschätzte Entropie aufweist, die einer vorbestimmten Eigenschaft entspricht, und Generieren einer Zufallszahl für Verschlüsselungsvorgänge aus dem ausgewählten zumindest einen der unabhängigen Signale.

5. Kommunikationsvorrichtung nach Anspruch 5, wobei die vorbestimmte Eigenschaft im Aufweisen der geschätzten Entropie besteht, die einem vorgegebenen Grenzwert entspricht.

6. Kommunikationsvorrichtung nach Anspruch 5, wobei die vorbestimmte Eigenschaft darin besteht, dass zumindest ein statistischer Test bestanden wird.

**Revendications**

1. Procédé pour établir dans un dispositif mobile (12) un nombre aléatoire pour des opérations cryptographiques comprenant les étapes de :

réception dans le dispositif mobile d'une pluralité de signaux de système mondial de positionnement, GPS, (15) ;
séparation de chacun des signaux GPS reçus en ses trois composantes d'Almanach (A), d'Éphémérides (E) et de Code (C) et le traitement de ces trois composantes en tant que signaux indépendants ;
estimation d'une entropie pour les signaux indépendants selon une localisation où les signaux GPS sont reçus par le dispositif mobile ;
sélection d'au moins l'un des signaux indépendants ayant une entropie estimée satisfaisant une propriété prédéterminée ; et
génération à partir d'au moins un signal sélectionné des signaux indépendants du nombre aléatoire.

2. Procédé selon la revendication 1, dans lequel ladite propriété prédéterminée est celle où l'entropie estimée satisfait une limite préétablie.

3. Procédé selon la revendication 1, dans lequel ladite propriété prédéterminée est celle de réussite d'au moins un essai statistique.

4. Appareil de communications (10) comprenant :

un dispositif mobile (12) ;
un moyen (14) pour recevoir dans le dispositif mobile une pluralité de signaux de système mondial de positionnement, GPS, (15), dans lequel le moyen (14) est conçu pour séparer chacun des signaux GPS reçus en ses trois composantes d'Almanach (A), d'Éphémérides (E) et de Code (C) de sorte que ces composantes puissent être traitées en tant que signaux indépendants ; et
un moyen (16) pour estimer une entropie pour les signaux indépendants selon une localisation où les signaux GPS sont reçus par le dispositif mobile, la sélection d'au moins l'un des signaux indépendants ayant une entropie estimée satisfaisant une propriété prédéterminée, et la génération à partir de l'au moins un signal sélectionné des signaux indépendants d'un nombre aléatoire pour des opérations cryptographiques.

5. Appareil de communication selon la revendication 5, dans lequel ladite propriété prédéterminée est celle où l'entropie estimée satisfait une limite préétablie.

6. Appareil de communication selon la revendication 5, dans lequel ladite propriété prédéterminée est celle de réussite d'au moins un essai statistique.

**FIG. 1**

**FIG. 2**

**FIG. 3**

14

A = "ALMANAC"
E = "EPHEMERIS"
C = "CODE"

GPS
SIGNALS
(PER SATELLITE)

A
E
C

GPS

LOCATION

INPUT TO
RAND GENERATOR

GPS SAT1

GPS SAT2

GPS SAT K

A/D

LOCATION
CALC
UNIT

LOCATION

FIG. 4

$rp_3$ ??? $p_4'$, $x_4'$

$rp_3$, $p_4$, $x_4$

$rp_2$, $p_3$, $x_3$

$rp_2$ ?? $p_3'$, $x_3'$

"TRACKER"

$rp_0$, $p_1'$, $x_1'$

$rp_1$, $p_2$, $x_2$

$rp_0$, $p_1$, $x_1$

"VICTIM"

$rp_1$? $p_2'$, $x_2'$

$rp_n$, $p_{n+1}$, $x_{+1}'$

????????, $p_{+1}'$, $x_{n+1}'$

**FIG. 5**

```
15 ─ MOBILITY
     SOURCE 1  →  A/D
15 ─ MOBILITY
     SOURCE 2  →  A/D
          ⋮
15 ─ MOBILITY
     SOURCE N  →  A/D
```

SOURCE MONITOR

MONITOR

16

22

SELECTOR → COMBINER → "SEED" → SECURITY DATA GENERATOR → KEYS, ETC.

14

**FIG. 6**

10

15 ─┐ SOURCE

12 ─┐

MOBILE DEVICE

RECEIVER

CHANNEL 1
CHANNEL 2
CHANNEL 3
⋮
CHANNEL N

18 ─

20 ─ RANDOM NUMBER GENERATOR

22 ─ ENCRYPTION KEY GENERATOR

24 ─ PROCESSOR

*FIG. 7*

**FIG. 8**

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 7177426 B1

**Non-patent literature cited in the description**

• **A. MENZES ; P. VAN OORSCHOT ; S. A. VAN-STONE.** Handbook of Applied Cryptography. CRC Press
• **M. JACOBSSON ; E. SHRIVER ; B. K. HILLYER ; A. JUELS.** A Practical Secure Physical Random Bit Generator. *Proceedings of the 5th ACM CCS conference,* 1998
• **J. VON NEUMANN.** Various Techniques used in Connection with Random Digits. *Applied Math Series,* 1951, vol. 12, 36-38
• **M. NÄSLUND ; A. RUSSELL.** Extracting Optimally Unbiased Bits from a Biased Source. *IEEE Transactions on Information Theory,* 2000, vol. 46 (3), 1093-1103